Europäisches Patentamt

European Patent Office

Office européen des brevets

(11) Publication number: 0 364 097
A1

# EUROPEAN PATENT APPLICATION

(21) Application number: 89309180.1

(22) Date of filing: 11.09.89

(51) Int. Cl.⁵: C04B 35/65

(30) Priority: 26.09.88 CA 578370

(43) Date of publication of application:
18.04.90 Bulletin 90/16

(84) Designated Contracting States:
AT BE CH DE ES FR GB GR IT LI LU NL SE

(71) Applicant: ALCAN INTERNATIONAL LIMITED
1188 Sherbrooke Street West
Montreal Quebec H3A 3G2(CA)

(72) Inventor: Apte, Prasad Shrikrishna
24 Seaforth Road
Kingston Ontario, K7M 1E2(CA)
Inventor: Pant, Aniket
R.R. 1, Inverary
Ontario, K0H 1X0(CA)

(74) Representative: Wilkinson, Stephen John et al
c/o Stevens, Hewlett & Perkins 5 Quality
Court Chancery Lane
London WC2A 1HZ(GB)

(54) Process for producing composite ceramic articles.

(57) This invention relates to a process for producing composite ceramic articles. The process involves causing a polycrystalline oxidation reaction product of a metal to infiltrate a porous void of an inert filler material (11). This is achieved by at least partially surrounding a body of an oxidizable metal (12) with the filler (11) and a susceptor material (13) that is heated when irradiated with microwaves (the filler and the susceptor may be the same or different), subjecting the metal (12), filler (11) and susceptor (13) to microwave irradiation to cause the metal to melt and allowing the molten metal to contact a preferably gaseous oxidant for the metal. The resulting composite ceramic can be used for a variety of purposes, e.g. as structural high temperature materials, grinding materials, etc.

FIG. 2

## Process for producing composite ceramic articles

This invention relates to a process for producing composite ceramic articles. More particularly, the invention relates to a process for producing such articles by infiltrating a permeable mass with a polycrystalline oxidation reaction product of a metal.

European Patent Application Serial No. 86300739.9 filed on February 4, 1986 in the name of Lanxide Corporation (published on September 3, 1986 under publication No. 0 193 292 A2) discloses a method of making self-supporting ceramic composite structures by positioning a parent metal (e.g. aluminum or an aluminum alloy) adjacent to a permeable mass of filler (e.g. ceramic material), heating the parent metal to a temperature above its melting point but below the melting point of the oxidation reaction product of the metal to form a body of molten metal, and reacting the molten metal with an oxidant. The metal forms an oxidation reaction product at its surface and the molten metal is continuously drawn through the oxidation reaction product into the permeable filler where it is itself oxidized so that the oxidation product grows into the void structure of the filler and the filler eventually becomes embedded in a dense matrix of the ceramic polycrystalline oxidation reaction product. The disclosure of the European application is incorporated herein by reference.

The method makes it possible to form composite ceramic materials while avoiding the difficult procedure of embedding a filler material into a ceramic by more conventional techniques such as by sintering, sintering with uniaxial pressing, sintering with isostatic pressing, etc. The composite product is formed without the generation of substantial forces on the filler so that the filler is not disturbed or displaced, and composites can be formed of materials that do not sinter together well (or at all). However, the method suffers from the disadvantage that the metal and filler material must be held at a high temperature in a furnace for a sufficiently long time to allow all (or a substantial proportion of) the metal to be oxidized (generally between 2 and 5 hours). This is not only expensive from the energy utilization viewpoint, but it also makes the procedure very slow because of the additional time required to heat the furnace and contents and then to allow them to cool after the method is complete. There is also the disadvantage that when oxidants other than air are employed, the heating elements usually present within conventional furnaces may themselves become excessively oxidized and damaged.

An object of the present invention is to overcome these drawbacks in order to make the method more effective and efficient.

According to one aspect of the invention there is provided a process for producing a composite ceramic article, which comprises: at least partially surrounding a body of a metal with a filler having voids therein; at least partially surrounding said body with a susceptor material which is heated when irradiated with microwaves; irradiating the filler, susceptor and metal body with microwaves to raise metal to a temperature above the melting point of the metal but below the melting point of an oxidation product of the metal; and permitting an oxidant for the metal to contact the metal while maintaining the metal at said temperature until at least some of said metal has been converted to said oxidation product and said oxidation product has penetrated at least some of said voids of the filler.

The present invention is based on the unexpected finding that microwave energy can be used to heat the metal body to the required temperature above its melting point but below the melting point of the oxide. This has the advantage of improving the economy of the process as well as dramatically reducing the pre-heating and cooling times. Moreover, since the use of microwave energy avoids the need for conventional heating elements, the use of aggressive oxidants can be accommodated without difficulty. The product can thus be produced extremely rapidly in a relatively inexpensive furnace system which operates with "cold" walls since the microwave energy is focussed on the object to be treated.

In preferred forms of the invention, temperatures of at least 1000°C are attainable in heating times of 15 to 60 minutes.

Despite the well known fact that bodies of metal cannot be heated substantially by microwaves, the process of the invention effectively uses microwave energy as the heating source. Microwave energy does not penetrate into the interior of a metal body and tends to be reflected from the surface. Moreover, if a grounded surface is positioned too close to the metal body, undesirable electrical arcing occurs. However, metal bodies can be heated by microwaves if the bodies are at least partially surrounded by a microwave susceptor (i.e. a dielectric material that is heated by microwaves). The susceptor is heated when subjected to microwave irradiation and then the heat is conveyed by conduction and/or radiation to the embedded metal body. Surprisingly, sufficient heat can be generated and quickly conveyed to the metal body to cause the metal to melt, particularly if the metal (e.g. aluminum or an aluminum alloy) has a relatively low melting point.

In the present invention, the heating of the metal by microwaves can be assured by employing a filler which either consists of or contains a microwave susceptor and embedding the parent metal body completely or substantially within the filler, or alternatively by partially surrounding one part of the body with the susceptor and another part of the body with the filler. The metal and the filler should be orientated in such a manner that the oxidation product will grow in a direction towards the filler, i.e. the filler is usually located between the metal body and the oxidant.

Examples of microwave susceptors that can either be used as fillers, used alone in areas separate from the fillers or mixed with non-susceptor fillers include $\beta$-alumina, zirconia (in forms other than monoclinic), silicon carbide, boron carbide, titanium, diboride, etc. As well as being microwave susceptors, these materials are also good heat insulators so that the heat generated within the susceptor mass is not quickly lost to the surrounding environment, and they do not melt or decompose at the treatment temperatures likely to be employed.

When the filler is a mixture of a microwave susceptor and a ceramic, metallic (having a melting point higher than the oxidizable metal) or intermetallic material that is a non-susceptor (e.g. $Si_3N_4$), the susceptor content may be as low as 10-15% by weight of the total weight of the filler when low melting point metals (e.g. aluminum and aluminum alloys) are employed. For metals with higher melting points, the minimum susceptor content normally must be higher in order to ensure that sufficient microwave coupling takes place to raise the temperature of the metal above its melting point.

The extent to which the metal body must be embedded in the filler/susceptor depends to some extent on the shape of the body and its melting point. Clearly, the body should be sufficiently embedded to achieve melting of the metal and a suitable infiltration of the oxide into the filler. Normally, at least 50% of the surface area of the body has to be covered by the susceptor/filler. Preferably the body is completely embedded in the filler/susceptor.

In some instances, the susceptor may be in the walls of a container used to hold the metal and filler bed. However, this is not usually desirable because there will be significant heat loss from the outside of the container walls and because the filler will tend to insulate the metal from the heat generated in the container walls.

Although the process of the invention is particularly suitable for use with aluminum or an aluminum alloy as the oxidizable metal, other metals are also suitable, e.g. silicon, titanium, tin and zirconium. Best results are achieved with metals having melting points below about 2000° C.

In order to achieve rapid heating and a temperature of the metal in the desired range (generally 850-1450° C for aluminum and its alloys), the energy of the microwaves should be selected according to the mass to be heated and the amount and efficiency of the microwave susceptor. For small bodies of metal surrounded by small amounts of filler containing a large proportion of susceptor, power levels achievable within conventional domestic microwave ovens (e.g. 750 watts) are suitable for operation of the process. Large scale operations may require higher power levels and either single-mode or multi-mode microwave furnaces may be utilized.

The temperature of the metal body can be monitored by means of an infra-red thermometer or other temperature measuring device that is not affected by microwave irradiation, and the power level of the microwaves can be reduced when the desired treatment temperature is reached. The power level should then be the level necessary to hold the temperature at the optimum level to achieve the desired rapid oxidation of the metal.

In most cases, as the metal is oxidized, the oxidized surface layer itself couples with the microwaves which will then become hotter than the adjacent metal. It appears that this weakens the surface layer and enables the metal to flow-through the oxide and the oxidation to proceed more rapidly. This may also have the effect of increasing the depth of penetration of the oxide into the filler.

As explained in the European application discussed above, the term "oxidation" should be construed broadly to mean any reaction of the oxidizable metal in which the metal gives up electrons to, or shares electrons with, another element. Consequently, suitable oxidants include, for example, oxygen, nitrogen, a halogen, sulphur, phosphorus, arsenic, carbon, boron, selenium, tellurium and compounds and combinations thereof, e.g. methane, ethane, propane, actylene, ethylene, prcpylene and mixtures such as air, $H_2/H_2O$ and $CO/CO_2$.

The oxidant may be in the form of a solid, liquid or gas provided it is able to contact and react with the molten metal. Preferably, the oxidant is gaseous and is present in the atmosphere within the microwave cavity used for the process or within a container located in the cavity. A supply of the gaseous oxidant into the microwave chamber should be provided to replace the oxidant as it is consumed. It is not usually necessary (or desirable in view of the nature of the equipment employed) to increase the pressure of the gaseous oxidant above normal atmospheric-pressure.

3

The filler may be in the form of a powder, granules, fibres or other form which can readily pack together while leaving voids for the growth of the oxidation product of the metal. Other examples of suitable shapes are provided in the European application. The packing of the susceptor should be loose enough to leave voids into which the oxidation product can grow, but not so loose that heat generated within the filler body is conveyed readily to the external environment, or that the voids are difficult to be filled by the oxide.

As noted above, when the metal has been melted and oxidation commences, molten metal is drawn through the oxidation reaction product towards the oxidant and towards the adjacent filler material. If desired, the method can be continued until all of the metal has oxidized or it may be terminated while some metal remains unoxidized, in which case the final composite product will include metal, metal oxidation product and filler material.

When aluminum or certain other metals are used, it may be advantageous to use a dopant to promote oxidation of the metal. Useful dopants for aluminum include magnesium metal or zinc metal.

These may be alloyed with the aluminum, coated on it or provided in the filler bed. Another example of a dopant is a flux commonly used for aluminum processing (e.g. the flux sold under Alcan's trade mark NOCOLOK and described in U.S. Patent 3,951,328 to Wallace et al issued on April 20, 1976, the disclosure of which is incorporated therein by reference).

Examples of the reactions which may be carried out using aluminum as the oxidizable metal and oxygen or nitrogen as the oxidant are:

$$4Al + 3O_2 \rightarrow 2Al_2O_3$$
$$3Si + 2N_2 \rightarrow Si_3N_4$$
$$2Al + N_2 \rightarrow 2AlN$$

The invention is described in further detail with reference to the accompanying drawings, in which:

Fig. 1 is a cross-section (on an enlarged scale relative to Fig. 2) of a crucible holding a sample to be treated and subjected to the process of the invention;

Fig. 2 is a similar cross-section showing an alternative arrangement;

Fig. 3 is a horizontal cross section in plan view of a microwave cavity containing a crucible as shown in Fig. 1 or Fig. 2; and

Figs. 4 and 5 are photomicrographs of samples obtained in the Examples provided below.

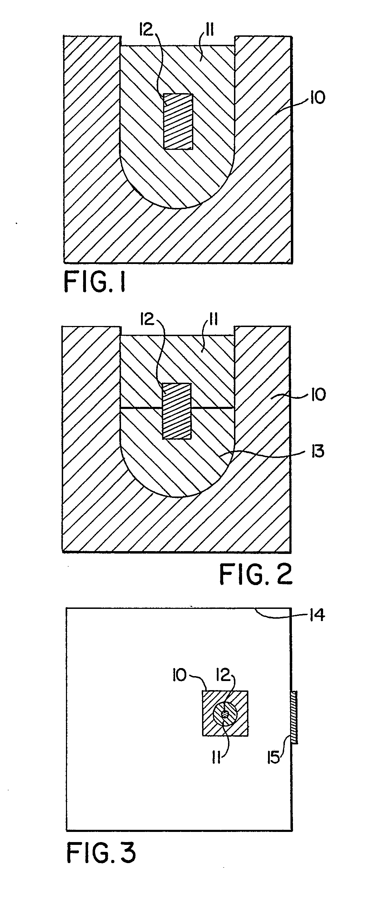

The crucible 10 as shown in Fig. 1 is preferably made of a microwave-transparent material such as insulating brick and holds a bed of filler material 11 and a body of an oxidizable metal 12. The filler material 11 may consist of or contain a microwave susceptor and the content of the susceptor should be high enough to cause the metal to heat to the desired temperature when irradiated with microwaves.

In the embodiment of Fig. 2, the material in the crucible 10 is divided into two different horizontal strata 11, 13. The lower stratum 13 is a microwave susceptor material. The stratum 11 is a filler that is not itself a susceptor. The metal body 12 is positioned at the junction of the strata so that it is partly embedded in each type of material. If the oxidant is gaseous it permeates from above and the oxide tends to grow upwardly into the filler material while the metal is heated from below by the susceptor.

As shown in Fig. 3, the crucible is positioned within a microwave cavity 14 opposite a waveguide opening 15 to enable the crucible to be irradiated by focussed microwaves. The interior of the cavity 14 is provided with an oxidizing gaseous atmosphere.

The Examples below provide further illustration of the invention but should not be interpreted as limiting the scope of the invention.

EXAMPLE 1

A 4.38 g cylinder (9.5 mm diameter x 19.1 mm long) of aluminum alloy (containing silicon and magnesium) was placed in a bed of 30% SiC, 70% $\alpha$-alumina in the manner shown in Figure 1. The entire assembly was placed in a domestic microwave oven at the position shown in plan view in Figure 3. The microwave oven was turned on at full power corresponding to a power level of 750 W. After an initial induction period of approximately 60 minutes, the oxidation reaction was completed in approximately 15 minutes.

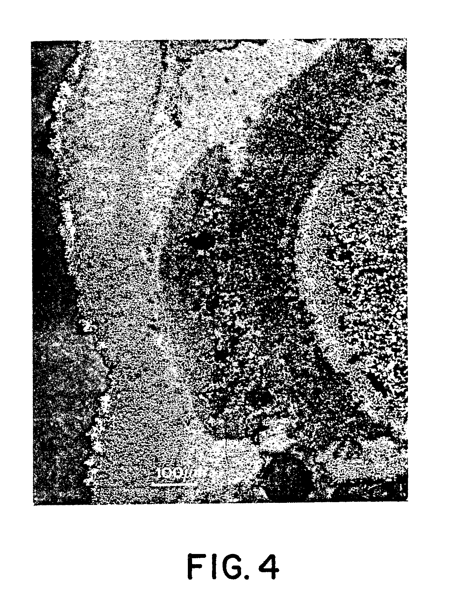

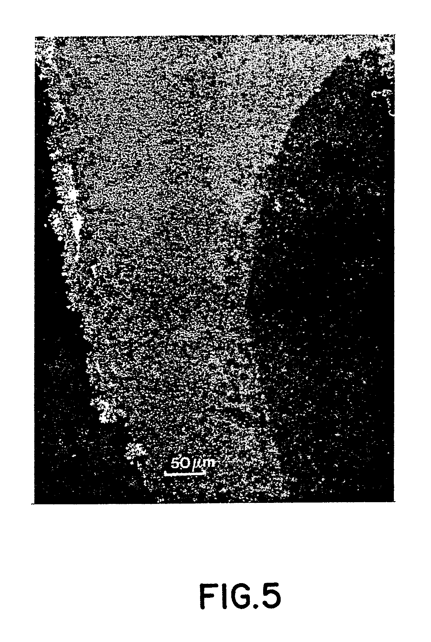

The observed ceramic formation can be seen in Figures 4 and 5. An increase in sample weight (due to the oxidation of the metal), was observed.

EXAMPLE 2

The procedure of Example 1 was repeated except for using an aluminum/2.3% lithium alloy. A sample weight increase of 59% was observed due to oxidation over a time period of 1 hour.

EXAMPLE 3

The procedure of Example 2 was repeated and a weight increase due to oxidation of 38% was observed after a time period of 98 minutes.

The results differ to a certain extent from those obtained in Example 2 because of an increased water content of the powder bed resulting in additional time required for drying out the bed before the temperature could rise to the desired range.

EXAMPLE 4

A 45 g sample of aluminum alloy JKT-380 with a nominal composition as shown in the table below was heated in a bed of smelter grade alumina with a mean size of 60 microns. The sample weighed about 58 g after 180 minutes, an increase of 13 g which represents about 1/3 of the maximum possible. A cross sectional cut revealed that approxi- mately 40% of the aluminum alloy had been consumed and a cavity formed in its place while the oxide grew out from the original alloy surface. The thickness of the oxide layer ranged from about 3 mm to 6 mm.

| Composition of Alloy JKT-380 | |
| --- | --- |
| Content | Element |
| 3.7% | Cu |
| 0.91% | Fe |
| 0.24% | Mg |
| 0.21% | Mn |
| 0.035% | Ni |
| 7.79% | Si |
| 0.019% | Ti |
| 3.00% | Zn |
| <0.01% | Cr, Zr, V |
| 0.04% | Cu, Be, Sn |
| Balance - Al | |

EXAMPLE 5

A 34 g sample of aluminum alloy JKT380.1 was buried in a sample of 8 mesh activated alumina spheroids. The assembly was heated in a multimode microwave cavity and heated using 750 watts of microwave power. After 270 minutes almost all the aluminum alloy had oxidized. The oxidized metal had penetrated into the alumina spheroids and the space between the spheroids.

EXAMPLE 6

The method described in the Example above was used to make a granular abrasive material having suitable properties.

**Claims**

5

EP 0 364 097 A1

1. A process for producing a composite ceramic article which comprises at least partially surrounding a body of metal with a filler having voids therein, raising the metal to a temperature above the melting point of the metal but below the melting point of an oxidation product of the metal, and permitting an oxidant for the metal to contact the metal while maintaining the temperature of the metal at said temperature until at least some of said metal has been converted to said oxidation product and said oxidation product has penetrated at least some of said voids of said filler, characterized in that said body of metal is at least partially surrounded with a susceptor which is heated when irradiated with microwaves and in that said filler, susceptor and body are irradiated with microwaves to effect said raising of the temperature of said metal.

2. A process according to Claim 1 characterized in that said filler and said susceptor are one and the same material.

3. A process according to Claim 1 characterized in that said filler and said susceptor form a mixture.

4. A process according to Claim 1 characterized in that said filler and susceptor contact different areas of said metal body.

5. A process according to any preceding claim characterized in that said body is fully embedded in a material selected from said filler, said susceptor, a mixture of said filler and susceptor and strata formed by said filler and said susceptor.

6. A process according to any preceding claim characterized in that said metal body comprises aluminum or an aluminum alloy.

7. A process according to any preceding claim characterized in that said susceptor is a material selected from β-alumina, zirconia, silicon carbide, boron carbide and titanium diboride.

8. A process according to any preceding claim characterized in that said filler is a material selected from the group consisting of a ceramic material, a metallic material having a melting point higher than the oxidizable material and an intermetallic material.

9. A process according to any preceding claim characterized in that the filler is silicon nitride.

10. A process according to Claim 3 characterized in that the metal body is made of aluminum or an aluminum alloy and said mixture contains at least 10% by weight of said susceptor.

11. A process according to Claim 3 characterized in that the metal body is made of aluminum or an aluminum alloy and said mixture contains at least 15% by weight of said susceptor.

12. A process according to any preceding claim characterized in that the microwave irradiation is continued until all of the metal has oxidized.

13. A process according to any of claims 1 to 11 characterized in that the microwave irradiation is terminated before all of the metal has oxidized.

14. A process according to any preceding claim characterized in that the microwave irradiation is carried out by placing the metal body, susceptor and filler in a suitable container in a microwave cavity containing a gaseous oxidant for the metal and introducing microwaves into the cavity.

15. A process according to any preceding claim characterized in that a dopant capable of increasing the rate of oxide formation of the metal is employed in association with the metal.

6

FIG. I

FIG. 2

FIG. 3

FIG. 4

FIG.5

# EUROPEAN SEARCH REPORT

Application number

EP 89309180.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.X) 5 |
|---|---|---|---|
| D,Y | EP - A2 - 0 193 292 (LANXIDE CORPORATION) * Claims * | 1-11, 15 | C 04 B 35/65 |
| P,Y | EP - A1 - 0 299 905 (LANXIDE TECHNOLOGY COMPANY LP) * Claims * | 1-11, 15 | |
| Y | JP - A - 60-221 367 (NIPPON MICROWAVE KK) * Totality * | 1,12- 14 | |

|  |  |
|---|---|
|  | TECHNICAL FIELDS SEARCHED (Int. Cl.X)5 |
|  | C 04 B |

The present search report has been drawn up for all claims

| Place of search | Date of completion of the search | Examiner |
|---|---|---|
| VIENNA | 01-02-1990 | BECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document